# EUROPÄISCHE PATENTSCHRIFT

(11) **EP 0 792 763 B1**
(45) Veröffentlichungstag und Bekanntmachung des Hinweises auf die Patenterteilung: **25.09.2002**
(21) Anmeldenummer: 96120706.5
(22) Anmeldetag: 21.12.1996
(51) Int. Cl.: B60H 1/00

(54) **Verfahren und Anordnung zur Mischluftregelung in einer Klimaanlage eines Kraftfahrzeuges**
Method and device for controlling the mixing of air in a vehicle air conditioning
Procédé et dispositif de régulation du mélange d'air dans une installation de climatisation de véhicule

(30) Priorität: 01.03.1996 DE 19608015
(43) Veröffentlichungstag der Anmeldung: 03.09.1997
(73) Patentinhaber: Siemens Aktiengesellschaft, 80333 München (DE)
(72) Erfinder: Kettner, Detlef, 68782 Brühl (DE)

(56) Entgegenhaltungen:
- DE-A- 3 624 171
- DE-A- 4 031 050
- US-A- 4 362 026
- US-A- 4 506 514
- US-A- 5 390 728
- PATENT ABSTRACTS OF JAPAN vol. 096, no. 005, 31. Mai 1996 & JP 08 020219 A (SANDEN CORP;OTHERS: 01), 23. Januar 1996

## Beschreibung

Die Erfindung betrifft ein Verfahren zur Mischluftregelung in einer Klimaanlage eines Kraftfahrzeuges, bei welchem Frischluft und/oder Umluft der Klimaanlage zugeführt wird, sowie eine Anordnung zur Durchführung des Verfahrens.

Dokument JP-A-8-02019 (siehe auch nachveröffentlichtes Dokument US-A-5590540) offenbart die Oberbegriffe der Ansprüche 1 und 6.

Bei heute üblichen Kraftfahrzeugklimaanlagen wird wahlweise Frischluft oder Umluft zur Luftaufbereitung mit einem Ventilator durch die Klimaanlage gefördert.

Mit zunehmenden Komfortansprüchen entstand bei Fahrzeugklimaanlagen der Wunsch, die Fahrzeuginnentemperatur automatisch so zu regeln, dass die Fahrzeuginsassen sich im Fahrzeug möglichst wohlfühlen. Üblicherweise wird dabei mittels eines Temperaturfühlers die Fahrzeuginnentemperatur gemessen und mit einer Steuereinrichtung die gewünschte Temperatur eingestellt. Meist ist es energiereiche Frischluft, die im Dauerbetrieb durch die Wärmetauscher der Klimaanlage gefördert wird. Eine Auswahl von Frisch- oder Umluft zum Zwecke der ständigen Energieoptimierung findet hierbei jedoch nicht statt.

Aus der US 4,506,514 ist ein Verfahren bekannt, bei dem eine Anlage zur Kühlung eines Arbeitsbereichs, der Arbeitsmaschinen und Beleuchtung als Wärmequellen aufweist, die Enthalpie von Frischluft und Umluft bei der Auswahl der dem Arbeitsbereich gekühlt zugeführten Zuluft berücksichtigt. Die Kühlung der Zuluft erfolgt durch Sprühwasser.

Der Erfindung liegt somit die Aufgabe zugrunde, ein Verfahren zur Optimierung des Energieverbrauchs für Kraftfahrzeugklimaanlagen und ein geeignetes Klimagerät anzugeben.

Erfindungsgemäß wird die Aufgabe durch ein Verfahren nach Anspruch 1 bzw. ein Klimagerät nach Anspruch 6 gelöst.

Der Vorteil der Erfindung besteht darin, dass dem Wärmetauscher der Klimaanlage ein automatisch geregeltes Luftgemisch zugeführt wird, welches den energetisch günstigsten Zustand aufweist. Insbesondere in den gemäßigten Klimazonen kann somit vollautomatisch zwischen energetisch günstigster Frisch- oder Umluft gewählt werden.

Der Vergleich der spezifischen Enthalpie der direkt dem Wärmetauscher zugeführten Mischluft mit der spezifischen Enthalpie der Frischluft erlaubt eine besonders genaue Einstellung des Frischluft- und Umluftstromes.

In einer Ausführung der Erfindung wird die Zufuhr von Frischluft sowie Umluft oder/und Mischluft nach dem Vergleich der spezifischen Enthalpien so geregelt, dass die jeweils niedrigste spezifische Enthalphiedifferenz an einem Kältewärmetauscher eingestellt wird.

Vorteilhafterweise wird die spezifische Enthalpie dadurch bestimmt, dass die Temperatur und die Luftfeuchtigkeit gemessen wird. Alternativ kann die spezifische Enthalpie auch über die Feuchtkugeltemperatur bestimmt werden.

Um zu gewährleisten, dass die im Fahrzeug anwesenden Personen ausreichend mit Frischluft versorgt werden, wird ein Sollfrischluftanteil in Abhängigkeit der im Kraftfahrzeug befindlichen Personenzahl gewählt.

Das erfindungsgemäße Verfahren wird vorzugsweise durch eine Anordnung realisiert, bei welcher in einem Klimagerät des Kraftfahrzeuges eine
Frischluftklappe und eine Umluftklappe angeordnet sind und die eingeleitete Luft mit Hilfe eines Ventilators zu einem Kältewärmetauscher bewegt wird, wobei sowohl im Frischluftstrom als auch im Umluftstrom oder/und im Mischluftstrom je ein Temperatursensor und ein Luftfeuchtesensor angeordnet sind, welche entsprechende Signale zur Bestimmung der spezifischen Enthalpien an ein Klimaregelgerät abgeben, das die Frischluftklappe und die Umluftklappe in Abhängigkeit der spezifischen Enthalpien regelt.

Es läßt sich somit einfach mit an sich bekannten, in jeder Klimaanlage vorhandenen Mitteln das erfindungsgemäße Verfahren realisieren. Insbesondere der Einsatz eines Mikrocomputers als Regeleinrichtung ermöglicht eine einfache Bestimmung der spezifischen Enthalpien mit Hilfe geeigneter Software.

Weitere Ausgestaltungen sind in den Unteransprüchen gekennzeichnet.

Die Erfindung läßt zahlreiche Ausführungsbeispiele zu. Eines davon soll anhand der in der Zeichnung schematisch dargestellten Figuren näher erläutert werden.

Es zeigt:
- Fig. 1:: zeigt die für das erfindungsgemäße Verfahren notwendigen Mittel einer Klimasteueranlage eines Kraftfahrzeuges,
- Fig. 2:: die Anordnung der Mittel gemäß Figur 1 im Kraftfahrzeug.

Gleiche Merkmale sind mit gleichen Bezugszeichen gekennzeichnet.

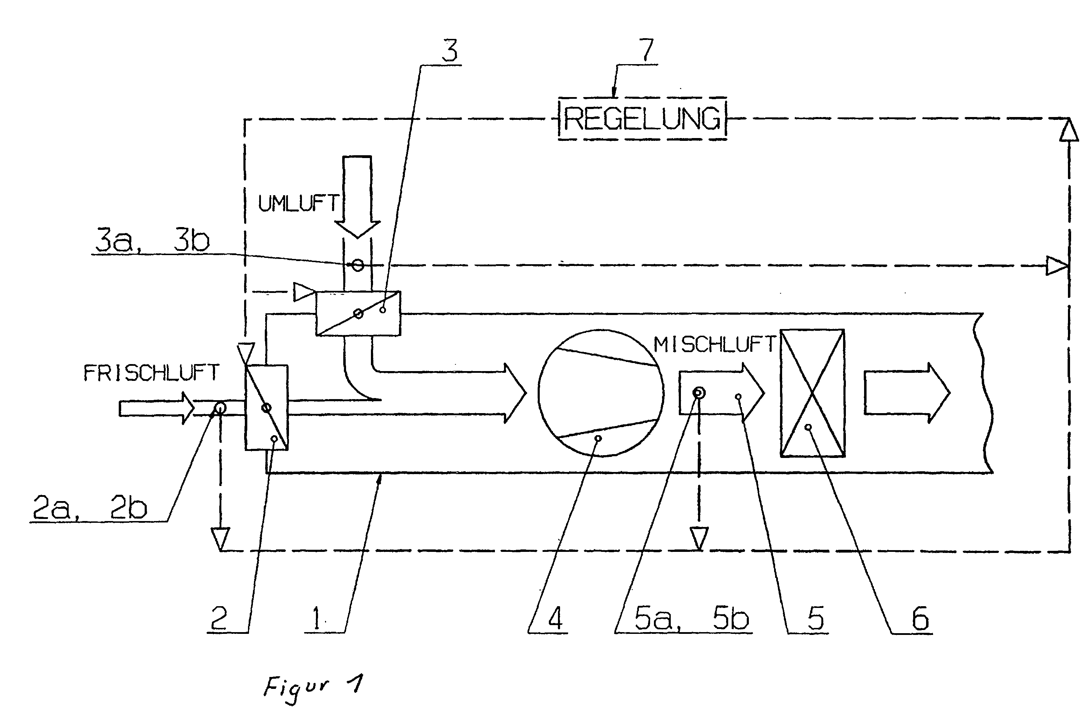

Gemäß Figur 1 sind in einem Klimagerät 1 sind sowohl eine Frischluftklappe 2 zur Zufuhr von Frischluft und eine Umluftklappe 3 zur Einstellung der Umluftzufuhr aus dem Kraftfahrzeug angeordnet.

Die Um- und Frischluft wird mittels eines Ventilators 4 gefördert und dabei gleichzeitig verwirbelt. Es entsteht Mischluft 5, die dem Kältewärmetauscher 6 zugeführt und von diesem im Kühlbetrieb an den Fahrzeuginnenraum abgegeben wird.

Der Kälteleistungsbedarf eines Kältewärmetauschers 6 eines Klimagerätes 1 bestimmt sich aus dem Produkt der spezifischen Enthalpiedifferenz zwischen Ein- und Austritt der zu kühlenden Luft durch den Kältewärmetauscher und des Luftmassenstromes durch den Wärmetauscher.

Um nun die optimale Leistung des Kältewärmetauschers 6 des Klimagerätes 1 einzustellen, wird die spezifische Enthalpie sowohl der Frischluft als auch der Umluft bestimmt.

Alternativ dazu können die spezifischen Enthalpien der Frischluft als auch der Mischluft 5 vor dem Kältewärmetauscher 6 verglichen werden.

Zu diesem Zweck sind im Frischluftstrom in der Nähe der Frischluftklappe 2 ein Temperatursensor 2a und ein Sensor für die relative Luftfeuchtigkeit 2b angeordnet.

Ein Temperatursensor 3a und ein weiterer Sensor für die relative Luftfeuchtigkeit 3b sind auch in der Nähe der Umluftklappe 3 angeordnet. Die Signale der Temperatursensoren 2a, 3a und der Luftfeuchtesensoren 2b, 3b werden dem Klimaregelgerät 7 zur Berechnung der spezifischen Enthalpien für die Frischluft und die Umluft zugeführt.

Die so ermittelte spezifischen Enthalpien der Frischluft und der Umluft werden miteinander verglichen. Ausgehend von diesem Vergleich werden die Frischluftklappe 2 und die Umluftklappe 3 so geöffnet, daß sich am Kältewärmetauscher 6 die niedrigste Enthalpiedifferenz einstellt. Die verschiedenen Öffnungszustände der einzelnen Klappen sind dabei fest einstellbar.

Wie bereits erläutert, ist ein dritter Temperatursensor 5a und ein dritter Luftfeuchtesensor 5b im Mischluftstrom 5 dem Ventilator 4 nachgeordnet. Auch die Meßergebnisse dieser Sensoren werden dem Klimaregelgerät 7 zugeführt, welches die spezifische Enthalpie der Mischluft 5 errechnet. Je nach Genauigkeitsgrad der Regelung werden die Umluft- und die Frischluftklappe in Abhängigkeit der Enthalpiewerte der Frischluft und der Umluft oder der Frischluft und der Mischluft bestimmt.

Zur Durchführung eines Feinabgleiches der Regelung ist es auch denkbar, daß das Klimaregelgerät 7 die Signale der Sensoren im Umluft-, Frischluft- und Mischluftstrom gleichzeitig verarbeitet.

Um eine Mindestmenge an Frischluft für die Passagiere zu gewährleisten, wird je nach Anzahl der Kraftfahrzeuginsassen ein Sollfrischluftanteil von 20 % bis 80 % vorgesehen.

Um festzustellen, wieviele Personen sich im Fahrzeug aufhalten, werden elektrische Kontakte in den Fahrzeugsitzen und/oder den Sicherheitsgurtschloßmechanismen durch das Klimaregelgerät 7 abgefragt und so der entsprechende Sollfrischluftanteil eingestellt.

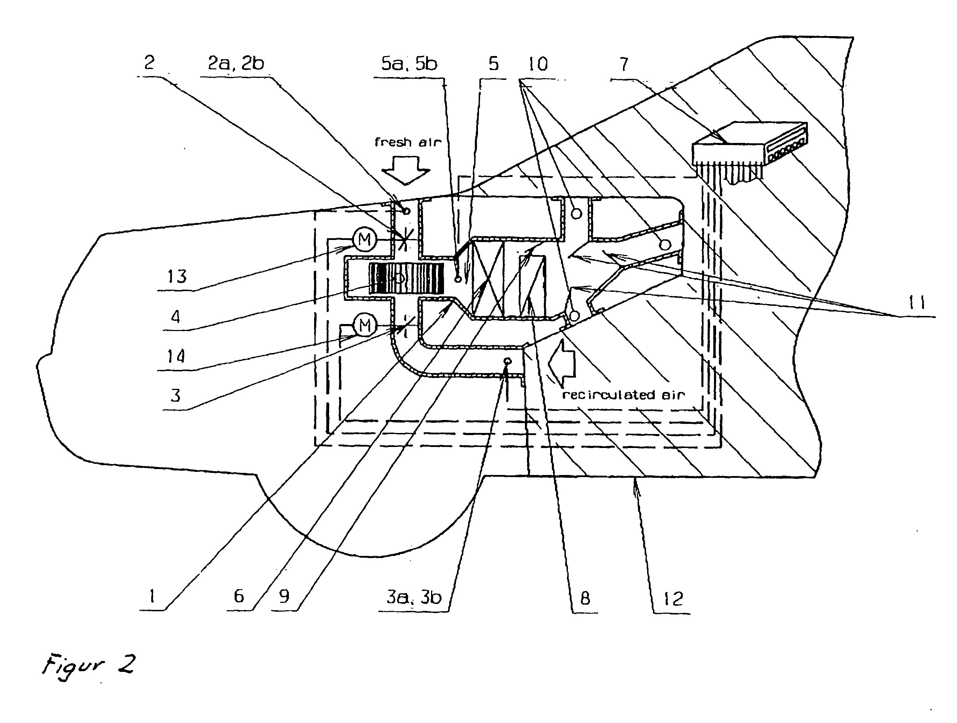

Gemäß Figur 2 ist das Klimagerät 1 in seiner konkreten Anordnung im Kraftfahrzeug 12 dargestellt.

Über die Frischluftklappe 2, deren Stellung von einem Stellmotor 13 in Abhängigkeit von elektrischen Signalen gesteuert wird, die vom Klimaregelgerät 7 in Abhängigkeit des beschriebenen Verfahrens angesteuert wird, wird Frischluft aus der Umgebung des Fahrzeuges in das Kraftfahrzeug 12 angesaugt.

Die Umluft aus dem Fahrgastraum des Kraftfahrzeuges wird über die Umluftklappe 3 vom Klimagerät 1 angesaugt. Auch die Stellung der Umluftklappe 3 wird in Abhängigkeit von elektrischen Signalen des Klimaregelgerätes 7 von einem Stellmotor 14 gesteuert. Über den Ventilator 4 werden Um- und Frischluft in das Klimagerät gefördert, wodurch hinter dem Ventilator 4. Mischluft 5 entsteht. Diese Mischluft 5 wird dem Kältewärmetauscher 6 zugeführt.

Im Kühlbetrieb wird die Mischluft 5 über Ausströmer 10 an den Fahrgastraum abgegeben. Diese Ausströmer 10 sind in Kanälen angeordnet, die in Richtung Windschutzscheibe, in Richtung Fahrer bzw. Beifahrer und in Richtung des Fußbereiches des Fahrers bzw. Beifahrers weisen. Mittels der in den einzelnen Kanälen angeordneten Luftverteilerklappen 11, kann der Lufteintritt vom Fahrer bzw. Beifahrer reguliert werden.

An den Kältewärmetauscher 6 schließt sich ein Heizwärmetauscher 8 an. Die vom Kältewärmetauscher abgegebene Luftmenge wird mit Hilfe einer Temperaturklappe 9 am Heizwärmetauscher vorbeigeführt und dabei erwärmt. Im Heizbetrieb strömt dann die entsprechend temperierte Mischluft in den Fahrgastraum.

## Patentansprüche

1. Verfahren zur Mischluftregelung in einem Klimagerät eines Kraftfahrzeuges, bei welchem Frischluft und/oder Umluft dem Klimagerät zugeführt wird, **gekennzeichnet durch** die Verfahrensschritte:
- Bestimmen der spezifischen Enthalpie der Frischluft sowie der Umluft und/oder einer Mischluft,
- Vergleichen der so bestimmten spezifischen Enthalpien,
- Regelung der Zufuhr von Frischluft und Umluft derart, dass die Mischluft die jeweils energetisch günstigste spezifische Enthalpie bei Gewährleistung einer Mindestmenge an Frischluft aufweist.

2. Verfahren nach Anspruch 1, **dadurch gekennzeichnet, dass** nach dem Vergleich der spezifischen Enthalpien die Zufuhr von Frischluft sowie Umluft so geregelt wird, dass sich die niedrigste spezifische Enthalpiedifferenz an einem Kältewärmetauscher einstellt.

3. Verfahren nach Anspruch 1 oder 2, **dadurch gekennzeichnet, dass** zur Bestimmung der spezifischen Enthalpie die Temperatur und die relative Luftfeuchtigkeit gemessen werden.

4. Verfahren nach einem der Ansprüche 1 oder 2, **dadurch gekennzeichnet, dass** die Bestimmung der spezifischen Enthalpie mittels der Feuchtkugeltemperatur erfolgt.

5. Verfahren nach Anspruch 4, **dadurch gekennzeichnet, dass** der Sollfrischluftanteil in Abhängigkeit der im Kraftfahrzeug befindlichen Personenzahl gewählt wird.

6. Kraftfahrzeugklimagerät (1), in dem eine Frischluftklappe (2) und eine Umluftklappe (3) sowie Temperatursensoren (2a, 3a, 5a) und Luftfeuchtesensoren (2b, 3b, 5b), welche entsprechende Signale an ein Klimaregelgerät (7) zur Regelung der Frischluftklappe (2) und der Umluftklappe (3) abgeben, angeordnet sind und die eingeleitete Luft mit Hilfe eines Ventilators (4) zu einem Kältewärmetauscher (6) bewegt wird,
**dadurch gekennzeichnet, dass** sowohl im Frischluftstrom als auch im Umluftstrom und/oder Mischluftstrom jeweils einer der Temperatursensoren (2a, 3a, 5a) und einer der Luftfeuchtesensoren (2b, 3b, 5b) angeordnet ist und das Klimaregelgerät (7) zur Bestimmung der spezifischen Enthalpien aus den entsprechenden Signalen und zur Regelung der Frischluftklappe und der Umluftklappe in Abhängigkeit der spezifischen Enthalpien ausgelegt ist.

7. Kraftfahrzeugklimagerät nach Anspruch 6, **dadurch gekennzeichnet, dass** der Temperatursensor (5a) und der Luftfeuchtesensor (5b) des Mischluftstromes hinter dem Ventilator (4) angeordnet sind.

8. Kraftfahrzeugklimagerät nach Anspruch 6 oder 7, **dadurch gekennzeichnet, dass** das Klimaregelgerät (7) mit Sensoren zur Detektion von Personen im Kraftfahrzeug verbunden ist.

## Claims

1. Method for mixed-air regulation in an air-conditioning apparatus of a motor vehicle, in which fresh air and/or circulating air is supplied to the air-conditioning apparatus, **characterized by** the method steps:
- determination of the specific enthalpy of the fresh air and also of the circulating air and/or of a mixed air,
- comparison of the specific enthalpies thus determined,
- regulation of the supply of fresh air and circulating air in such a way that the mixed air has a specific enthalpy which is in each case the most favourable in energy terms, whilst ensuring a minimum quantity of fresh air.

2. Method according to Claim 1, **characterized in that**, the supply of fresh air and also circulating air is regulated according to the comparison of the specific enthalpies in such a way that the lowest specific enthalpy difference is set at a refrigerating heat exchanger.

3. Method according to Claim 1 or 2, **characterized in that** the temperature and the relative air humidity are measured in order to determine the specific enthalpy.

4. Method according to one of Claims 1 or 2,
**characterized in that** the specific enthalpy is determined by means of the wet-ball temperature.

5. Method according to Claim 4, **characterized in that** the desired fresh-air fraction is selected as a function of the number of persons located in the motor vehicle.

6. Motor vehicle air-conditioning apparatus (1), in which are arranged a fresh-air flap (2) and a circulating-air flap (3) and also temperature sensors (2a, 3a, 5a) and air-humidity sensors (2b, 3b, 5b) which transmit corresponding signals to an air-conditioning regulating apparatus (7) for regulating the fresh-air flap (2) and the circulating-air flap (3), and the introduced air is moved with the aid of a fan (4) to a refrigerating heat exchanger (6), **characterized in that** in each case one of the temperature sensors (2a, 3a, 5a) and one of the air-humidity sensors (2b, 3b, 5b) are arranged both in the fresh-air stream and in the circulating-air stream and/or the mixed-air stream, and the air-conditioning regulating apparatus (7) is designed to determine the specific enthalpies from the corresponding signals and to regulate the fresh-air flap and the circulating-air flap as a function of the specific enthalpies.

7. Motor vehicle air-conditioning apparatus according to Claim 6, **characterized in that** the temperature sensor (5a) and the air-humidity sensor (5b) of the mixed-air stream are arranged downstream of the fan (4).

8. Motor vehicle air-conditioning apparatus according to Claim 6 or 7, **characterized in that** the air-conditioning regulating apparatus (7) is connected to sensors for the detection of persons in the motor vehicle.

## Revendications

1. Procédé de régulation de l'air mélangé dans une installation de conditionnement d'air d'un véhicule, dans le cas duquel de l'air frais et/ou de l'air ambiant est amené à l'installation de conditionnement d'air, **caractérisé par** les étapes suivantes :
- détermination de l'enthalpie spécifique de l'air frais ainsi que de l'air ambiant et/ou d'un air mélangé,
- comparaison des enthalpies spécifiques ainsi déterminées,
- régulation de l'apport d'air frais et d'air ambiant de telle manière que l'enthalpie spécifique de l'air mélangé soit respectivement la plus favorable du point de vue énergétique tout en garantissant une quantité minimale en air frais

2. Procédé selon la revendication 1, **caractérisé en ce qu'**après la comparaison des enthalpies spécifiques, l'apport d'air frais ainsi que d'air ambiant est régulé de telle manière que la différence d'enthalpie spécifique la plus faible possible soit obtenue sur un échangeur thermique de réfrigération.

3. Procédé selon la revendication 1 ou 2, **caractérisé en ce que** la température et l'humidité relative de l'air sont mesurées pour la détermination de l'enthalpie spécifique.

4. Procédé selon l'une des revendications 1 ou 2, **caractérisé en ce que** la détermination de l'enthalpie spécifique a lieu par l'intermédiaire de la température mesurée au thermomètre à bulbe humide.

5. Procédé selon la revendication 4, **caractérisé en ce que** la composante de consigne d'air frais est choisie en fonction du nombre de personnes se trouvant dans le véhicule.

6. Conditionneur d'air de véhicule (1) dans lequel sont disposés un volet d'air frais (2) et un volet d'air ambiant (3) ainsi que des capteurs de température (2a, 3a, 5a) et des capteurs d'humidité de l'air (2b, 3b, 5b), qui fournissent à un appareil de régulation de la climatisation (7) des signaux correspondants servant à la régulation du volet d'air frais (2) et du volet d'air ambiant (3) et dans lequel l'air introduit est transporté vers un échangeur thermique de réfrigération (6) à l'aide d'un ventilateur (4), **caractérisé en ce qu'**aussi bien dans l'écoulement d'air frais que dans l'écoulement d'air ambiant et/ou d'air mélangé sont disposés respectivement un des capteurs de température (2a, 3a, 5a) et un des capteurs d'humidité de l'air (2b, 3b, 5b) et **en ce que** l'appareil de régulation de la climatisation (7) est conçu pour la détermination des enthalpies spécifiques à partir des signaux correspondants et pour la régulation du volet d'air frais et du volet d'air ambiant en fonction des enthalpies spécifiques.

7. Conditionneur d'air de véhicule selon la revendication 6, **caractérisé en ce que** le capteur de température (5a) et le capteur d'humidité de l'air (5b) de l'écoulement d'air mélangé sont disposés en aval du ventilateur (4).

8. Conditionneur d'air de véhicule selon la revendication 6 ou 7, **caractérisé en ce que** l'appareil de régulation de la climatisation (7) est relié à des capteurs pour la détection de personnes se trouvant dans le véhicule.
